# EUROPÄISCHE PATENTSCHRIFT

(11) **EP 2 488 567 B1**
(45) Veröffentlichungstag und Bekanntmachung des Hinweises auf die Patenterteilung: **06.05.2015**
(21) Anmeldenummer: 10741978.0
(22) Anmeldetag: 12.08.2010
(51) Int. Cl.: C08G 63/82, C08G 63/08, C08G 18/42

(54) **VERFAHREN ZUR HERSTELLUNG VON POLYESTERN UND CO-POLYESTERN AUS LACTONEN**
PROCESS FOR MAKING POLYESTER OR COPOLYESTER FROM LACTONES
PROCÉDÉ DE PRÉPARATION DE POLYESTERS OU DE COPOLYESTERS À PARTIR DE LACTONES

(30) Priorität: 14.10.2009 DE 102009045664
(43) Veröffentlichungstag der Anmeldung: 22.08.2012
(73) Patentinhaber: Evonik Degussa GmbH, 45128 Essen (DE)
(72) Erfinder: SPYROU, Emmanouil, 46514 Schermbeck (DE); SCHMIDT, Friedrich Georg, 45721 Haltern am See (DE); KREISCHER, Susanne, 45701 Herten (DE); VÖCKER, Andrea, 48683 Ahaus (DE); GOLLAN, Elke, 44653 Herne (DE); RITTER, Helmut, 42111 Wuppertal (DE); ZHOU, Jiawen, 76135 Karlsruhe (DE)
(86) Internationale Anmeldenummer: PCT/EP2010/061755
(87) Internationale Veröffentlichungsnummer: WO 2011/045100

(56) Entgegenhaltungen:
- EP-A1- 0 409 735
- YASHIRO T; KRICHELDORF H R; HUIJSER S: "Syntheses of polyesters from succinic anhydride and various diols catalyzed by metal triflates" MACROMOLECULAR CHEMISTRY AND PHYSICS, Bd. 210, Nr. 19, 7. Oktober 2009 (2009-10-07), Seiten 1607-1616, XP002601106
- BUZIN P; LAHCINI M; SCHWARZ G; KRICHELDORF H R: "Aliphatic polyesters by bismuth triflate-catalyzed polycondensations of dicarboxylic acids and aliphatic diols" MACROMOLECULES, Bd. 41, 4. November 2008 (2008-11-04), Seiten 8491-8495, XP002601107
- KRICHELDORF H R; BEHNKEN G; SCHWARZ G; KOPF J: "High molar mass poly([epsilon]-caprolactone) by means of diphenyl bismuth ethoxide, a highly reactive single site initiator" MACROMOLECULES, Bd. 41, 24. Juni 2008 (2008-06-24), Seiten 4102-4107, XP002601108
- KUNIOKA M; WANG Y; ONOZAWA S-Y: "Polymerization of poly([epsilon]-caprolactone) using yttrium triflate" POLYMER JOURNAL, Bd. 35, Nr. 5, 1. März 2003 (2003-03-01), Seiten 422-429, XP002601109
- KRICHELDORF H R; HACHMANN-THIESSEN H; SCHWARZ G: "Di-, Tri- and tetrafunctional poly([epsilon]-caprolactone)s by Bi(OAc) 3-catalyzed ring-opening polymerizations of [epsilon]-caprolactone" MACROMOLECULES, Bd. 37, 31. Juli 2004 (2004-07-31), Seiten 6340-6345, XP002601110
- NOMURA N; TAIRA A; TOMIOKA T; OKADA M: "a catalytic approach for cationic living polymerization: Sc(OTf)3-catalyzed ring-opening polymerization of lactones" MACROMOLECULES, Bd. 33, 17. Februar 2000 (2000-02-17), Seiten 1497-1499, XP002601111
- KRICHELDORF H R; ROST S: "Biodegradable multiblock copolyesters prepared from [epsilon]-caprolactone, L-lactide, and trimethylene carbonate by means of bismuth hexanoate" MACROMOLECULES, Bd. 38, 8. September 2005 (2005-09-08), Seiten 8220-8226, XP002601112

## Beschreibung

Die Anmeldung beschreibt ein Verfahren zur Herstellung von Polyestern und Co-Polyestern aus Lactonen.

Lactone (cyclische Ester) können durch Verbindungen mit aktivem Wasserstoff, (sogenannten Startern) wie Alkoholen oder Aminen in Gegenwart von Katalysatoren bei Temperaturen von 20 bis 200°C polymerisiert werden. Wird dabei nur ein Lacton verwendet, spricht man bei den Reaktionsprodukten von Polyestern oder Polylactonen, die Verwendung von mehreren verschiedenen Lactonen führt zu Co-Polyestern oder auch Co-Polylactonen.

Die Herstellung von Polyestern und Co-Polyestern aus Lactonen wurde schon häufig untersucht. Neben metallkatalysierten Polymerisationen wie sie z.B. in Kowalski, A. et al. Macromolecules, 2000, 33, 689-695, oder in Chem, H.L. et al. Organometallics, 2001, 23, 5076-5083 beschrieben werden, sind auch anionische initiierte (Cherdron, H. et al., Makromol. Chem. 1962, 56, 179), kationische initiierte (Basko, M. et al., J. Polym. Chem., 2006, 44, 7071-7081) und Lipase katalysierte Polymerisationen (Ritter, H. et al. Adv. Polym. Sci., 2006, 194, 95) bekannt. Auch die Verwendung von Festphasenkatalysatoren ist bereits beschrieben worden z. B. in DE 32 21 692.

Alle diese Herstellvorschriften haben den Nachteil, dass entweder hohe Temperaturen und lange Reaktionszeiten benötigt werden, die zu Verfärbungen und Nebenreaktionen führen oder aber dass die Herstellverfahren nur unzureichend auf weniger reaktive substituierte Lactone anzuwenden sind.

Aufgabe der Erfindung war es, ein Herstellverfahren für Polyester und Co-Polyester aus Lactonen zu finden, welches zum einen bei niedrigen Temperaturen abläuft und zum anderen auch auf weniger reaktive substituierte Lactone anzuwenden ist.

Überraschend wurde gefunden, dass durch den Einsatz von Bismuthtriflat als Katalysator, sowohl einfache, als auch weniger reaktive (z.B. substituierte) Lactone bei niedrigen Temperaturen bevorzugt von maximal 100 °C zu Polyestern und/oder Co-Polyester polymerisiert werden können. Außerdem wurde gefunden, dass der erfindungsgemäße Katalysator die Reaktionszeit deutlich verringert.

Gegenstand der Erfindung ist ein Verfahren zur Herstellung von Polyestern und Co-Polyestern durch Umsetzung von
A) mindestens einem Lacton,
B) mindestens einem Alkohol oder Amin als Starter
   und
C) in Gegenwart von Bismuthtriflat als Katalysator.

Bevorzugt wird das Verfahren bei Temperaturen von maximal 100 °C angewendet, besonders bevorzugt von Raumtemperatur bis 80 °C.

Geeignete Lactone A) sind alle cyclischen Ester mit 3 - 20 Ringatomen und gegebenenfalls einem oder mehreren weiteren Substituenten am Ring. Diese Substituenten können gleichzeitig oder unabhängig voneinander Alkyl-, Aryl-, Aralkyl-, Heteroaryl-, Alkoxyalkylreste mit 1 - 18 Kohlenstoffatomen bedeuten, jeweils linear oder verzweigt, unverbrückt oder mit anderen Resten verbrückt, unter Ausbildung von Cyclen, Bicyclen oder Tricyclen und wobei die Verbrückungsatome neben Kohlenstoff auch Heteroatome sein können, und jeder Rest zusätzlich noch eine oder mehrere Alkohol-, Amino-, Ether, Ester-, Keto-, Thio-, Urethan-, Harnstoff-, Allophanatgruppen, Doppelbindungen, Dreifachbindungen oder Halogenatome aufweisen kann. Geeignete Lactone sind z.B. ε-Caprolacton, γ-Butyrolacton, β-Propiolacton, β-Methylpropiolacton, 3,3,5- und 3,5,5-Trimethyl-E-caprolacton, γ-Valerolacton, β-Methyl-δ-valerolacton. Auch Mischungen von solchen Monomeren können eingesetzt werden. Bevorzugt werden ε-Caprolacton und 3,3,5- und 3,5,5-Trimethyl-ε-caprolacton, besonders bevorzugt werden Mischungen aus ε-Caprolacton und 3,3,5- und 3,5,5-Trimethyl-ε-caprolacton.

Geeignete Starter unter B) sind alle monomeren, oligomeren oder polymeren Mono-oder Polyalkohole oder Amine. Beispiele für Alkohole sind Ethanol, Propanol, Butanol, Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.02,6]decan (Dicidol), Bis(1,4 hydroxymethyl)-cyclohexan, 2,2-Bis-(4-hydroxycyclohexyl)propan, 2,2-Bis-[4-(β-hydroxyethoxy)-phenyl]propan, 2-Methylpropandiol-1,3, 2 Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris(β-hydroxyethyl)isocyanurat, Pentaerythrit, Mannit, Sorbit, Diethylenglykol, Triethylenglykol, Tetraethylenglykol, Dipropylenglykol, Polypropylenglykole, Polybutylenglykole, Xylylenglykol, Hydroxypivalinsäureneopentylglykolester und Polytetrahydrofurane. Beispiele für Amine sind Propanamin, Butanamin, Ethylendiamin, Propylendiamin, Hexamethylendiamin, 2,2,4-Trimethylhexamthylendiamin und 2,4,4-Trimethylhexamthylendiamin, Diethylentriamin, Triethylentetramin, 4,4'-Dicyclohexylmethyldiamin, Isophorondiamin und aminierte Polyether (Handelsbezeichnung Jeffamine). Es können auch Mischungen der Starter B) eingesetzt werden.
Bevorzugt verwendet werden Neopentylglykol, Butandiol oder Trimethylolpropan, allein oder in Mischungen.
Die Menge an B) wird so eingesetzt, dass daraus Polyester resultieren, die eine OH-Zahl von 5-500 besitzen. Dies bedeutet, dass je nach Molmasse und Funktionalität von B) dieses einen Anteil von 1-90 Gew.-%, bevorzugt 3-35 Gew.-% an der Gesamtformulierung hat.

Als Katalysator C wird Bismuthtriflat eingesetzt. Dabei ist Triflat die gängige Abkürzung für Salze der Trifluormethylsulfonsäure. Die Summenformel des Katalysators lautet Bi(F₃CSO₃)₃. Er wird in Mengen von 0,01 bis 2 Gew.-% bezogen auf die Gesamtformulierung eingesetzt, bevorzugt in 0,1 bis 1 Gew.-%.
Der Katalysator ist kommerziell erhältlich z.B. bei Acros.

Nach dem erfindungsgemäßen Verfahren lassen sich Polyester mit beliebigen Polymerisationsgraden herstellen. Der Polymerisationsgrad wird durch das Äquivalenzverhältnis von Startermolekülen zu Lacton bestimmt. Da Polyester mit einer mittleren Molmasse (Mn) von 300 bis 10000 g/mol besonderes technisches Interesse finden, lassen sich über die Stöchiometrie die erforderlichen Starter-Lacton-Verhältnisse einstellen. Bevorzugt werden Polyester hergestellt mit Mn: 300 bis 10000 g/mol, OH-Zahl: 5-400 mg KOH/g, Säurezahl 0-20 mg KOH/g, Monomergehalt: 0-20 Gew.-% bezogen auf die Gesamtformulierung.

Prinzipiell ist es möglich, nach der Herstellung des Polyesters bzw. des Copolyesters den Katalysator zu deaktivieren. Dazu eignen sich vor allem basische Stoffe, die in Konzentrationen von 0,1-2 Gew.-% eingesetzt werden. In Frage kommen z.B. Amine, wie bevorzugt Triethylamin, oder Methylethylketoxime, oder aber Metallsalze von Carbonsäuren, bevorzugt z. B. Natriumacetat.

Als Reaktionsaggregate für die Umsetzung kommen beispielsweise beheizbare Rührkessel, Reaktionsrohre, Statikmischer, Kneter oder auch Extruder in Frage. Sowohl die Ausgangsprodukte als auch das erfindungsgemäße Endprodukt können fest oder flüssig sein. Die Reaktionstemperatur sollte vorzugsweise so gewählt werden, dass alle Bestandteile flüssig in der gleichen Phase vorliegen. Die Temperatur sollte aber unter 100 °C liegen, bevorzugt unter 80°C, besonders bevorzugt unter 70 °C. Die Reaktionszeit beträgt zwischen wenigen Minuten und mehreren Stunden, in Ausnahmefällen auch Tagen. Bevorzugt beträgt die Reaktionszeit 30 min bis 6 h. Die Reaktion kann zwar auch in inerten Lösemitteln durchgeführt werden, bevorzugt wird aber Lösemittel frei gearbeitet.
Die Reaktion kann bevorzugt so geführt werden, dass kaum noch Lacton in der Reaktionsmischung verbleibt, bevorzugt <0,5 Gew.-%, oder aber überschüssiges Lacton kann nach der Reaktion destillativ abgetrennt und wieder in den nächsten Herstellprozess eingebracht werden.

Die mittlere Molmasse (Mn) wird wie folgt bestimmt: ASTM D 3016-78, ASTM D 3536-76, ASTM D 3593-80, GPC (gel permeation chromatography).

Bei der Co-Polymerisation von zwei oder mehreren Lactonen mit deutlich unterschiedlichen Reaktivitäten hat es sich bewährt, das (oder die) weniger reaktive(n) Lacton(e) vorzulegen und das (oder die) reaktivere(n) Lactone portionsweise während der Reaktion zuzugeben.

Die nach dem Verfahren hergestellten Polyester eignen sich z.B. für die Herstellung von Polyurethanen.

Nachfolgend soll die Erfindung mit Beispielen erläutert aber nicht eingeschränkt werden.

### Beispiele:

### A) Einsatzstoffe

| **Einsatzstoffe** | **Produktbeschreibung, Hersteller** |
|---|---|
| ε-Caprolacton | Aldrich |
| Mischung aus 3,3,5-und 3,5,5-Trimethyl-ε-caprolacton | Herstellung beschrieben in JP09124637 |
| Bismuthtriflat | Aldrich |
| NPG | Neopentylglycol, Aldrich |

### B) Herstellung der Polyester

### 1) Einsatz von ε-Caprolacton

114 g ε-Caprolacton und 12,5 g NPG werden mit 0,6 g Bismuthtriflat versetzt und 30 min bei 60 °C gerührt. Nach dieser Reaktionszeit resultiert ein Polyester mit einer OH-Zahl von 103 mg KOH/g, einem Monomergehalt von < 0,1 Gew.-% und einem mittleren Molmasse (Mn) von 1700 g/mol (GPC).

### 2) Einsatz von Trimethyl-ε-caprolacton

156 g eines Gemisches aus 3,3,5- und 3,5,5-Trimethyl-ε-caprolacton und 12,5 g NPG werden mit 0,6 g Bismuthtriflat versetzt und 200 min bei 60 °C gerührt. Nach dieser Reaktionszeit wird der Restmonomergehalt an Trimethyl-ε-caprolacton (15,9 Gew.-%) destillativ abgetrennt (Kurzwegverdampfer 70 °C, 0,1 mbar). Daraus resultiert ein Polyester mit einer OH-Zahl von 93 mg KOH/g, einem Monomergehalt von 1,2 Gew.-% und einer mittleren Molmasse (Mn) von 1500 g/mol (GPC).

### 3) Einsatz eines Gemisches aus ε-Caprolacton und Trimethyl-ε-caprolacton

46,8 g eines Gemisches aus 3,3,5- und 3,5,5-Trimethyl-ε-caprolacton werden mit 12,5 g NPG und mit 0,6 g Bismuthtriflat versetzt und auf 60 °C aufgeheizt. Dann werden 79,8 g ε-Caprolacton innerhalb von 200 min bei 60 °C tropfenweise zugegeben und dabei gerührt. Nach dieser Reaktionszeit wird der Restmonomergehalt an Trimethyl-ε-caprolacton destillativ abgetrennt (4,5 Gew.-%). Daraus resultiert ein Polyester mit einer OH-Zahl von 99 mg KOH/g, einem Monomergehalt (Trimethyl-ε-caprolacton) von 1,1 Gew.-% und einem mittleren Molmasse (Mn) von 1500 g/mol (GPC).

### A) Nicht erfindungsgemäßer Vergleichsversuch

Es wird die gleiche Ausgangsmischung wie bei 2) eingesetzt, allerdings wird statt Bismuthtriflat die gleiche Menge eines üblichen Katalysators verwendet, 0,6 g Zinnoctoat. Nach 15 h bei 130°C verbleiben noch etwa 30 Gew.-% Trimethylcaproclacton im Reaktionsgemisch.

Wie die Beispiele zeigen, ist lediglich Bismuthtriflat ist in der Lage, bei niedrigen Temperaturen und kurzen Reaktionszeiten auch wenig reaktive Lactone in die korrespondierenden Polyester zu überführen.

## Patentansprüche

1. Verfahren zur Herstellung von Polyestern und Co-Polyestern durch Umsetzung von
A) mindestens einem Lacton,
B) mindestens einem Alkohol oder Amin als Starter
und
C) in Gegenwart von Bismuthtriflat als Katalysator.

2. Verfahren nach Anspruch 1,
**dadurch gekennzeichnet,**
**dass** die Umsetzung bei Temperaturen von maximal 100 °C, bevorzugt bei Temperaturen von Raumtemperatur bis 80 °C erfolgt.

3. Verfahren nach mindestens einem der vorherigen Ansprüche,
**dadurch gekennzeichnet,**
**dass** Lactone A) mit 3 - 20 Ringatomen und gegebenenfalls einem oder mehreren weiteren Substituenten am Ring eingesetzt werden.

4. Verfahren nach Anspruch 3,
**dadurch gekennzeichnet,**
**dass** als Lactone A) ε-Caprolacton, γ-Butyrolacton, β-Propiolacton, β-Methylpropiolacton, 3,3,5- und 3,5,5-Trimethyl-ε-caprolacton, γ-Valerolacton, β-Methyl-δ-valerolacton, alleine oder in Mischungen, eingesetzt werden.

5. Verfahren nach Anspruch 4,
**dadurch gekennzeichnet,**
**dass** als Lactone A) ε-Caprolacton oder 3,3,5- und 3,5,5-Trimethyl-ε-caprolacton, bevorzugt Mischungen aus ε-Caprolacton und 3,3,5- und 3,5,5-Trimethyl-ε-caprolacton, eingesetzt werden.

6. Verfahren nach mindestens einem der vorherigen Ansprüche,
**dadurch gekennzeichnet,**
**dass** als Starter B) Ethanol, Propanol, Butanol, Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.02,6]decan (Dicidol), Bis(1,4 hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2 Methyl-pentandiol-1,5, 2,2,4-Trimethylhexandiol-1,6, 2,4,4-Trimethylhexandiol-1,6, Glycerin, Trimethylolpropan, Trimethylolethan, Hexantriol-1,2,6, Butantriol-1,2,4, Tris(β-hydroxyethyl)isocyanurat, Pentaerythrit, Mannit, Sorbit, Diethylenglykol, Triethylenglykol, Tetraethylenglykol, Dipropylenglykol, Polypropylenglykole, Polybutylenglykole, Xylylenglykol, Hydroxypivalinsäureneopentylglykolester, Polytetrahydrofurane, Propanamin, Butanamin, Ethylendiamin, Propylendiamin, Hexamethylendiamin, 2,2,4- und 2,4,4-Trimethylhexamthylendiamin, Diethylentriamin, Triethylentetramin, 4,4'-Dicyclohexylmethyldiamin, Isophorondiamin, aminierte Polyether, alleine oder in Mischungen, eingesetzt werden.

7. Verfahren nach mindestens einem der vorherigen Ansprüche,
**dadurch gekennzeichnet,**
**dass** als Starter B) Neopentylglykol, Butandiol oder Trimethylolpropan, allein oder in Mischungen, eingesetzt werden.

8. Verfahren nach mindestens einem der vorherigen Ansprüche,
**dadurch gekennzeichnet,**
**dass** die Menge B) einen Anteil von 1-90 Gew.-%, bevorzugt 3-35 Gew.-%, an der Gesamtformulierung aufweist.

9. Verfahren nach mindestens einem der vorherigen Ansprüche,
**dadurch gekennzeichnet,**
**dass** der Katalysators Bi(F₃CSO₃)₃ in Mengen von 0,01 bis 2 Gew.-% bezogen auf die Gesamtformulierung, bevorzugt in 0,1 bis 1 Gew.-%, eingesetzt wird.

10. Verfahren nach mindestens einem der vorherigen Ansprüche,
**dadurch gekennzeichnet,**
**dass** Polyester mit einer mittleren Molmasse (Mn) von 300 bis 10000 g/mol hergestellt werden.

11. Verfahren nach mindestens einem der vorherigen Ansprüche,
**dadurch gekennzeichnet,**
**dass** Polyester mit Mn: 300 bis 10000 g/mol, OH-Zahl: 5-400 mg KOH/g, Säurezahl 0-20 mg KOH/g, Monomergehalt: 0-20 Gew.-% bezogen auf die Gesamtformulierung, hergestellt werden.

12. Verfahren nach mindestens einem der vorherigen Ansprüche,
**dadurch gekennzeichnet,**
**dass** Lösemittel frei verfahren wird.

13. Verfahren nach mindestens einem der vorherigen Ansprüche,
**dadurch gekennzeichnet,**
**dass** die Reaktion so geführt wird, dass der Gehalt an Lacton in der Reaktionsmischung < 0,5 Gew.-% beträgt, oder aber überschüssiges Lacton nach der Reaktion destillativ abgetrennt wird.

14. Verfahren nach mindestens einem der vorherigen Ansprüche,
**dadurch gekennzeichnet,**
**dass** nach der Herstellung des Polyesters oder des Copolyesters der Katalysator deaktiviert wird, bevorzugt durch basische Stoffe, die in Konzentrationen von 0,1-2 Gew.-% eingesetzt werden, bevorzugt Amine, bevorzugt Triethylamin, oder Methylethylketoxime oder Metallsalze von Carbonsäuren, bevorzugt Natriumacetat.

## Claims

1. Process for preparing polyesters and copolyesters by reacting
A) at least one lactone,
B) at least one alcohol or amine as starter,
and
C) in the presence of bismuth triflate as catalyst.

2. Process according to Claim 1,
**characterized in that**
the reaction takes place at temperatures of not more than 100°C, preferably at temperatures from room temperature to 80°C.

3. Process according to at least one of the preceding claims,
**characterized in that**
lactones A) having 3 - 20 ring atoms and optionally one or more further substituents on the ring are used.

4. Process according to Claim 3,
**characterized in that**
lactones A) used are ε-caprolactone, γ-butyrolactone, β-propiolactone, β-methylpropiolactone, 3,3,5- and 3,5,5-trimethyl-ε-caprolactone, γ-valerolactone, β-methyl-δ-valerolactone, alone or in mixtures.

5. Process according to Claim 4,
**characterized in that**
lactones A) used are ε-caprolactone or 3,3,5- and 3,5,5-trimethyl-ε-caprolactone, preferably mixtures of ε-caprolactone and 3,3,5- and 3,5,5-trimethyl-ε-capro-lactone.

6. Process according to at least one of the preceding claims,
**characterized in that**
starters B) used are ethanol, propanol, butanol, monoethylene glycol, 1,2- and 1,3-propylene glycol, 1,4- and 2,3-butylene glycol, di-β-hydroxyethylbutanediol, 1,5-pentanediol, 1,6-hexanediol, 1,8-octanediol, decanediol, dodecanediol, neopentyl glycol, cyclohexanediol, 3(4),8(9)-bis(hydroxymethyl)tricyclo[5.2.1.0^{2,6}]decane (Dicidol), bis(1,4 hydroxymethyl)cyclohexane, 2,2-bis(4-hydroxycyclohexyl)propane, 2,2-bis[4-(β-hydroxyethoxy)phenyl]propane, 2-methylpropane-1,3-diol, 2-methylpentane-1,5-diol, 2,2,4-trimethylhexane-1,6-diol, 2,4,4-trimethylhexane-1,6-diol, glycerol, trimethylolpropane, trimethylolethane, hexane-1,2,6-triol, butane-1,2,4-triol, tris(β-hydroxyethyl)isocyanurate, pentaerythritol, mannitol, sorbitol, diethylene glycol, triethylene glycol, tetraethylene glycol, dipropylene glycol, polypropylene glycols, polybutylene glycols, xylylene glycol, neopentyl glycol hydroxypivalate, polytetrahydrofurans, propanamine, butanamine, ethylenediamine, propylenediamine, hexamethylenediamine, 2,2,4- and 2,4,4-trimethylhexamethylenediamine, diethylenetriamine, triethylenetetramine, 4,4'-dicyclohexylmethyldiamine, isophoronediamine, aminated polyethers, alone or in mixtures.

7. Process according to at least one of the preceding claims,
**characterized in that**
starters B) used are neopentyl glycol, butanediol or trimethylolpropane, alone or in mixtures.

8. Process according to at least one of the preceding claims,
**characterized in that**
the amount of B) as a proportion of the overall formulation is 1-90% by weight, preferably 3-35% by weight.

9. Process according to at least one of the preceding claims,
**characterized in that**
the catalyst Bi(F₃CSO₃)₃ is used in amounts of 0.01% to 2% by weight, based on the overall formulation, preferably at 0.1% to 1% by weight.

10. Process according to at least one of the preceding claims,
**characterized in that**
polyesters having an average molar mass (Mn) of 300 to 10 000 g/mol are prepared.

11. Process according to at least one of the preceding claims,
**characterized in that**
polyesters with an Mn of 300 to 10 000 g/mol, OH number of 5-400 mg KOH/g, acid number of 0-20 mg KOH/g, monomer content of 0-20% by weight, based on the overall formulation, are prepared.

12. Process according to at least one of the preceding claims,
**characterized in that**
it is operated solventlessly.

13. Process according to at least one of the preceding claims,
**characterized in that**
the reaction is carried out such that the amount of lactone in the reaction mixture is < 0.5% by weight, or else excess lactone is separated off by distillation after the reaction.

14. Process according to at least one of the preceding claims,
**characterized in that**
after the preparation of the polyester or copolyester, the catalyst is deactivated, preferably by basic compounds, which are used in concentrations of 0.1-2% by weight, preferably amines, preferably triethylamine, or methyl ethyl ketoximes or metal salts of carboxylic acids, preferably sodium acetate.

## Revendications

1. Procédé pour la préparation de polyesters et de copolyesters par transformation de
A) au moins une lactone,
B) au moins un alcool ou au moins une amine comme initiateur et
C) en présence de triflate de bismuth comme catalyseur.

2. Procédé selon la revendication 1, **caractérisé en ce que** la transformation a lieu à des températures d'au maximum 100°C, de préférence à des températures de la température ambiante à 80°C.

3. Procédé selon au moins l'une quelconque des revendications précédentes, **caractérisé en ce qu'**on utilise des lactones A) présentant 3-20 atomes de cycle et le cas échéant un ou plusieurs autres substituants sur le cycle.

4. Procédé selon la revendication 3, **caractérisé en ce qu'**on utilise, comme lactones A), l'ε-caprolactone, la γ-butyrolactone, la β-propiolactone, la β-méthylpropiolactone, la 3,3,5-triméthyl-ε-caprolactone et la 3,5,5-triméthyl-ε-caprolactone, la γ-valérolactone, la β-méthyl-δ-valérolactone, seules ou dans des mélanges.

5. Procédé selon la revendication 4, **caractérisé en ce qu'**on utilise, comme lactones A), l'ε-caprolactone ou la 3,3,5-triméthyl-ε-caprolactone et la 3,5,5-triméthyl-ε-caprolactone, de préférence des mélanges d'ε-caprolactone et de 3,3,5-triméthyl-ε-caprolactone et de 3,5,5-triméthyl-ε-caprolactone.

6. Procédé selon au moins l'une quelconque des revendications précédentes, **caractérisé en ce qu'**on utilise, comme initiateur B), l'éthanol, le propanol, le butanol, le monoéthylèneglycol, le 1,2-propylèneglycol et le 1,3-propylèneglycol, le 1,4-butylèneglycol et le 2,3-butylèneglycol, le di-β-hydroxyéthylbutanediol, le 1,5-pentanediol, le 1,6-hexanediol, le 1,8-octanediol, le décanediol, le dodécanediol, le néopentylglycol, le cyclohexanediol, le 3(4),8(9)-bis(hydroxyméthyl)-tricyclo[5.2.1.02,6]décane (dicidol), le bis(1,4 hydroxyméthyl)-cyclohexane, le 2,2-bis-(4-hydroxycyclohexyl)-propane, le 2,2-bis-[4-(β-hydroxyéthoxy)-phényl]-propane, le 2-méthylpropanediol-1,3, le 2-méthylpentanediol-1,5, le 2,2,4-triméthylhexanediol-1,6, le 2,4,4-triméthylhexanediol-1,6, le glycérol, le triméthylolpropane, le triméthyloléthane, l'hexanetriol-1,2,6, le butanetriol-1,2,4, l'isocyanurate de tris(β-hydroxyéthyle), le pentaérythritol, le mannitol, le sorbitol, le diéthylèneglycol, le triéthylèneglycol, le tétraéthylèneglycol, le dipropylèneglycol, les polypropylèneglycols, les polybutylèneglycols, le xylylèneglycol, l'ester néopentylglycolique de l'acide hydroxypivalique, le polytétrahydrofuranne, la propanamine, la butanamine, l'éthylènediamine, la propylènediamine, l'hexaméthylènediamine, la 2,2,4-triméthylhexaméthylènediamine et la 2,4,4-triméthylhexaméthylènediamine, la diéthylènetriamine, la triéthylènetétraamine, la 4,4'-dicyclohexylméthyldiamine, l'isophoronediamine, les polyéthers aminés, seuls ou dans des mélanges.

7. Procédé selon au moins l'une quelconque des revendications précédentes, **caractérisé en ce qu'**on utilise, comme initiateur B), du néopentylglycol, du butanediol ou du triméthylolpropane, seuls ou dans des mélanges.

8. Procédé selon au moins l'une quelconque des revendications précédentes, **caractérisé en ce que** la quantité B) représente une proportion de 1-90% en poids, de préférence de 3-35% en poids, par rapport à la formulation totale.

9. Procédé selon au moins l'une quelconque des revendications précédentes, **caractérisé en ce que** le catalyseur Bi(F₃CSO₃)₃ est utilisé en des quantités de 0,01 à 2% en poids par rapport à la formulation totale, de préférence de 0,1 à 1% en poids.

10. Procédé selon au moins l'une quelconque des revendications précédentes, **caractérisé en ce qu'**on prépare des polyesters présentant une masse molaire moyenne (Mn) de 300 à 10 000 g/mole.

11. Procédé selon au moins l'une quelconque des revendications précédentes, **caractérisé en ce qu'**on prépare des polyesters présentant Mn : 300 à 10 000 g/mole, indice d'OH : 5-400 mg de KOH/g, indice d'acide 0-20 mg de KOH/g, teneur en monomères : 0-20% en poids par rapport à la formulation totale.

12. Procédé selon au moins l'une quelconque des revendications précédentes, **caractérisé en ce qu'**on procède en l'absence de solvant.

13. Procédé selon au moins l'une quelconque des revendications précédentes, **caractérisé en ce que** la réaction est menée de manière telle que la teneur en lactone dans le mélange réactionnel est < 0,5% en poids, ou encore que la lactone en excès est séparée par distillation après la réaction.

14. Procédé selon au moins l'une quelconque des revendications précédentes, **caractérisé en ce qu'**après la préparation du polyester ou du copolyester, le catalyseur est désactivé, de préférence par des substances basiques, qui sont utilisées en des concentrations de 0,1-2% en poids, de préférence des amines, de préférence la triéthylamine, ou des méthyléthylcétoximes ou des sels métalliques d'acides carboxyliques, de préférence l'acétate de sodium.
